# FASCICULE DE BREVET EUROPEEN

(11) **EP 2 130 468 B1**
(45) Date de publication et mention de la délivrance du brevet: **28.03.2012**
(21) Numéro de dépôt: 09161951.0
(22) Date de dépôt: 04.06.2009
(51) Int. Cl.: A47J 37/06

(54) **Appareil de cuisson du type gaufrier à double position d'ouverture**
Kochgerät vom Typ Waffeleisen mit doppelter Öffnungsposition
Waffle-maker type cooking appliance with double open position

(30) Priorité: 06.06.2008 FR 0853788; 05.12.2008 FR 0858326
(43) Date de publication de la demande: 09.12.2009
(73) Titulaire: SEB SA, 69130 Ecully (FR)
(72) Inventeur: Excoffier, Dominique, 74150, Rumilly (FR); Chappel, Valérie, 74150, Rumilly (FR); Robin, Jean-Philippe, 74570, Groisy (FR)
(74) Mandataire: Pichat, Thierry

(56) Documents cités:
- WO-A-2007/140547
- DE-U1-202005 003 138

## Description

La présente invention concerne un appareil de cuisson du type gaufrier, c'est-à-dire un appareil tel qu'un gaufrier, un appareil à panini, un appareil à croque monsieur, un grille viande, comportant deux sous-ensembles de cuisson articulés entre eux, et plus particulièrement un appareil dont les sous-ensembles de cuisson peuvent avoir deux positions d'ouverture stable : une à plat (environ 180°), et une proche de 90°.

On connaît un appareil de cuisson du type comportant deux sous-ensembles de cuisson articulés entre eux par une charnière, et mobiles entre une position fermée et une position ouverte à plat à 180°, en passant par une position d'ouverture intermédiaire d'environ 90°, l'appareil comportant un dispositif de sélection pouvant passer d'un état à l'autre entre un état de blocage dans lequel l'amplitude de rotation des sous-ensembles est délimitée par leur position fermée et leur position d'ouverture intermédiaire, et un état de déblocage dans lequel les deux sous-ensembles peuvent atteindre leur position ouverture à plat.

Dans un tel appareil, le dispositif de sélection est formé par des charnons femelles portés par le sous-ensemble inférieur de cuisson qui s'étendent verticalement de façon à permettre une translation des charnons males portés par le sous-ensemble supérieur de cuisson (et de l'intégralité de ce dernier), et par des ergots portés par le sous-ensemble supérieur de cuisson qui sont adaptés à venir en butée contre des surfaces d'appui portées par le sous-ensemble inférieur de cuisson quand les charnons mâles sont disposés dans la partie basse des charnons femelles de façon à définir la position intermédiaire d'ouverture, et qui sont adaptés à contourner ces surfaces quand les charnons mâles sont disposés dans la partie haute des charnons femelles de façon à permettre d'atteindre la position d'ouverture à plat. Un tel appareil est divulgué, par exemple, dans le document DE 20 2005 003 138 U.

Cependant avec un tel dispositif, il est nécessaire de déplacer verticalement l'intégralité du sous-ensemble supérieur de cuisson quand il est dans une position proche de 90°, ce qui est peu pratique, et, du fait du poids du sous-ensemble, fastidieux.

La présente invention vise à réaliser un appareil de cuisson du type mentionné plus haut, ne présentant pas les inconvénients précités.

Selon l'invention, le dispositif de sélection comprend un bouton de commande manuel qui est monté en translation sur un premier sous-ensemble de cuisson, selon une direction radiale par rapport à l'axe de la charnière, entre une position de blocage et une position de déblocage qui correspondent aux deux états de blocage et de déblocage du dispositif de sélection.

Ainsi, il est seulement nécessaire de déplacer un bouton de commande manuel pour faire passer le dispositif de sélection d'un état à l'autre, ce qui est beaucoup plus pratique et moins fastidieux.

D'autres particularités et avantages de la présente invention apparaîtront dans les deux modes de réalisation donnés à titre d'exemples non limitatifs et illustrés dans les dessins mis en annexe dans lesquels :
La figure 1 est une vue en perspective d'un appareil de cuisson conforme à un premier mode de réalisation de la présente invention,
La figure 2 est une vue en coupe longitudinale de l'appareil illustré à la figure 1, l'appareil étant dans sa position fermée et le dispositif de sélection étant dans son état de verrouillage ;
La figure 3 est une vue similaire à la figure 2, l'appareil étant dans sa position fermée et le dispositif de sélection étant dans son état de blocage ;
La figure 4 est une vue similaire aux figures 2 et 3, l'appareil étant dans sa position d'ouverture intermédiaire et le dispositif de sélection étant dans sa son état de blocage ;
La figure 5 est une vue similaire aux figures 2 à 4, l'appareil étant dans sa position ouverte à plat et le dispositif de sélection étant dans son état de déblocage et d'immobilisation ;
La figure 6 est une vue d'une partie du bras de la poignée du sous-ensemble supérieur le long de laquelle le bouton de commande manuel est monté coulissant ;
La figure 7 est une vue de la surface intérieure du bouton de commande manuel qui est en contact avec la portion de bras illustrée à la figure 6 ;
La figure 8 est une vue en coupe partielle d'un appareil de cuisson conforme à un second mode de réalisation de la présente invention, en position d'ouverture intermédiaire ;
La figure 9 est une vue d'un ressort de rappel disposé au niveau de la charnière annexe entre le corps supérieur de cuisson et la poignée de l'appareil de la figure 8 ; et
La figure 10 est une vue en coupe de l'appareil de la figure 8 en position d'ouverture à plat illustrant le dispositif de stabilisation du corps supérieur de cuisson.

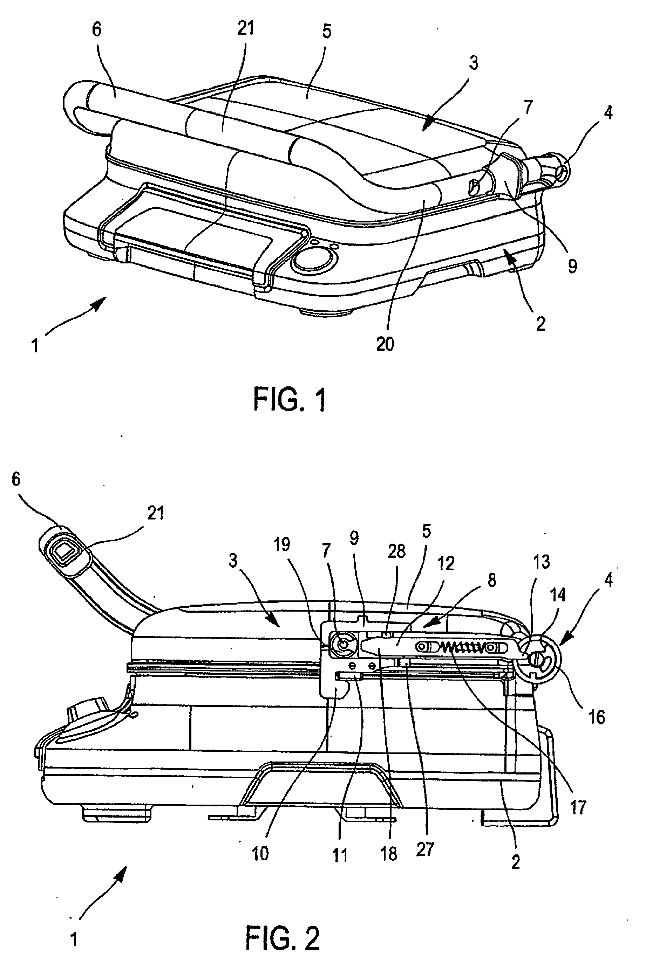

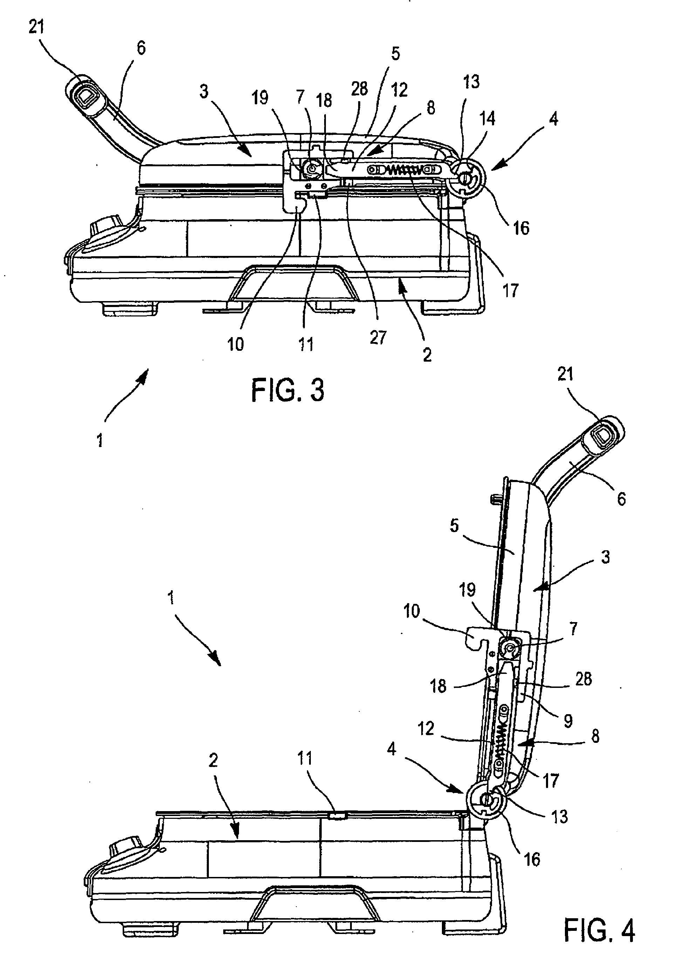

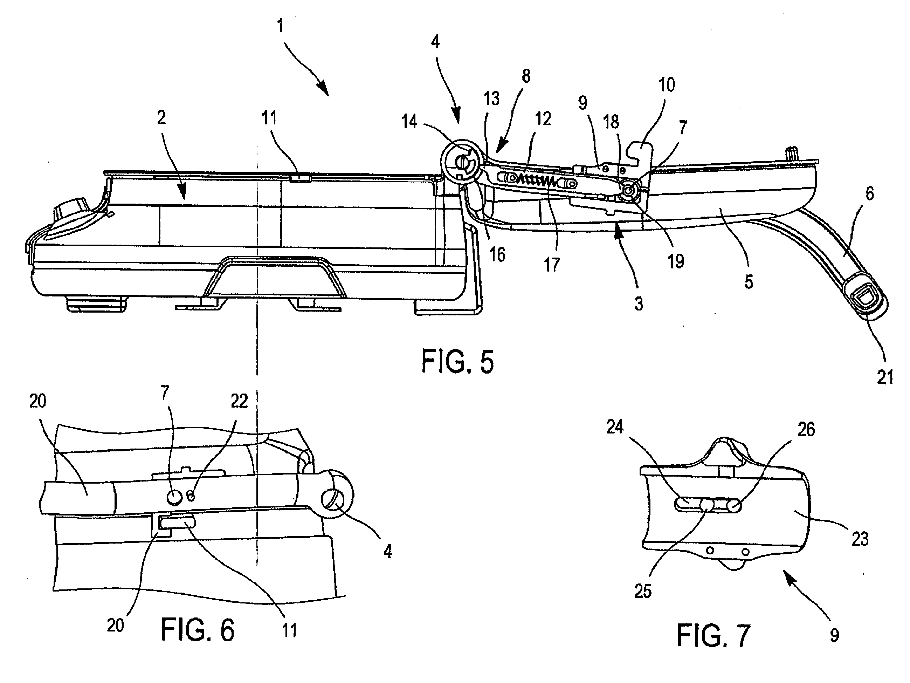

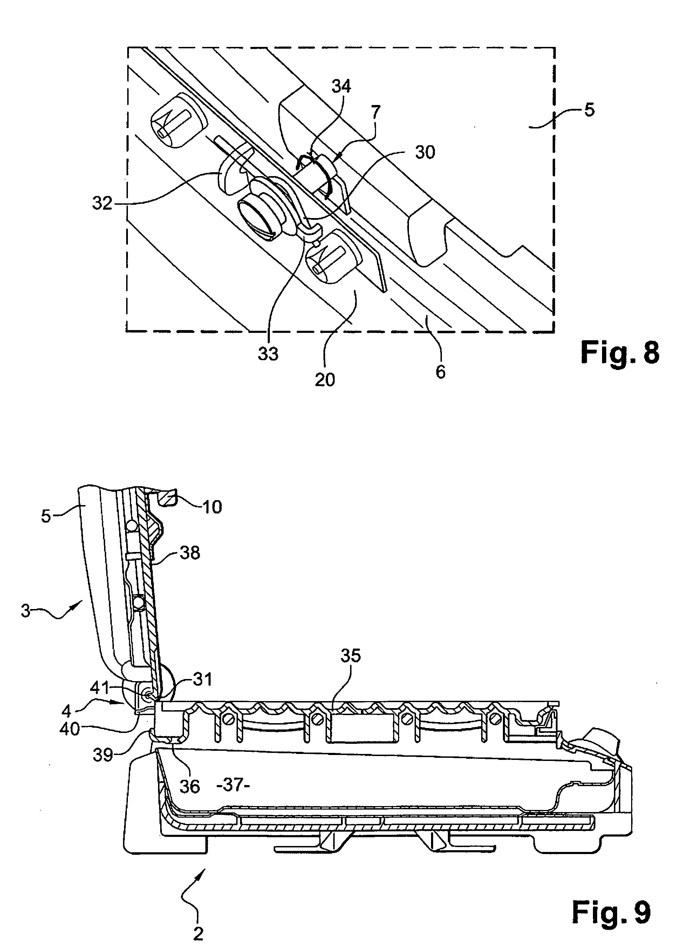

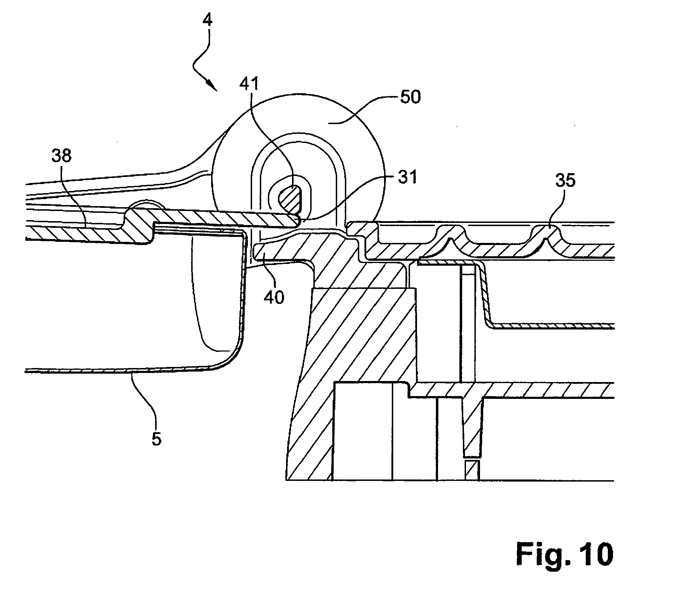

Les figures 1 à 10 illustrent un appareil de cuisson 1 (en l'occurrence, un gaufrier 1) comportant deux sous-ensembles de cuisson 2, 3 (en l'occurrence, un sous-ensemble inférieur de cuisson 2 et un sous-ensemble supérieur de cuisson 3) articulés entre eux par une charnière 4. Les deux sous-ensembles de cuisson 2, 3 sont mobiles entre une position fermée (comme illustré aux figures 1 à 3), une position stable d'ouverture intermédiaire d'environ 90° - plus précisément d'environ 100° de sorte que le sous-ensemble supérieur de cuisson 3 ne soit pas entraîné par son propre poids, dans sa position fermée (comme illustré à aux figures 4 et 8), et une position ouverte à plat d'environ 180° de façon à pouvoir être assimilé à un barbecue électrique (comme illustré aux figure 5 et 10).

En outre, dans les présents modes de réalisation, le sous-ensemble supérieur de cuisson 3 comprend, d'une part, un corps supérieur de cuisson 5 qui est adapté à cuire les aliments en coopération avec le sous-ensemble inférieur de cuisson 2, et, d'autre part, une poignée 6 (en forme de U) qui est montée pivotante par rapport au sous-ensemble inférieur de cuisson 2 par l'intermédiaire de la charnière 4 et par rapport au corps supérieur de cuisson 5 par l'intermédiaire d'une charnière annexe 7 dont l'axe est parallèle à celui de la charnière 4. Ainsi, le corps supérieur de cuisson 5 n'est pas directement relié au sous-ensemble inférieur de cuisson 2.

De façon plus précise, la poignée 6 comprend, d'une part, deux bras 20 qui s'étendent radialement, de chaque côté de l'appareil 1, depuis la charnière 4, le long du corps supérieur de cuisson 5, et une barre transversale 21 qui relie entre eux les deux bras 20 et qui porte la surface de préhension pour la manipulation de la poignée 6. En outre, la poignée 6 (et plus précisément, la barre transversale 21) est conformée de façon à prendre appui sur le plan de travail quand l'appareil 1 est dans sa position ouverte à plat (cf. figure 5) de façon à renforcer la stabilité de ce dernier.

L'appareil de cuisson 1 comprend également un dispositif de sélection 8 qui peut passer d'un état à l'autre entre un état de blocage tel qu'illustré aux figures 3 et 4 et un état de déblocage tel qu'illustré à la figure 5. Quand il est dans son état de blocage, l'amplitude de rotation des deux sous-ensembles de cuisson 2, 3 est délimitée par leur position fermée et leur position d'ouverture intermédiaire. Quand il est dans son état de déblocage, les deux sous-ensembles de cuisson 2, 3 peuvent atteindre leur position ouverture à plat.

Le dispositif de sélection 8 comprend un bouton de commande manuel 9 qui est monté en translation sur un premier sous-ensemble de cuisson (en l'occurrence, sur le sous-ensemble supérieur 3, et, plus précisément, sur la poignée 6 - ici, sur un bras 20 de la poignée 6). La direction de translation du bouton de commande manuel 9 est une direction radiale par rapport à l'axe de la charnière 4. La translation est le seul degré de liberté de ce bouton 9. Le bouton de commande manuel 9 est mobile entre une position de blocage qui correspond à l'état de blocage du dispositif de sélection 8, et une position de déblocage qui correspond à l'état de déblocage de ce dernier. Dans les présents modes de réalisation, de façon à être facilement accessible, le bouton de commande manuel 9 entoure la poignée 6 (sauf du côté adjacent au corps supérieur de cuisson 5).

Par ailleurs, dans les présents modes de réalisation, le bouton de commande manuel 9 a une position de verrouillage dans laquelle les deux sous-ensembles de cuisson 2, 3 sont verrouillés dans leur position fermée (cf. figure 2). De cette façon, le même bouton de commande manuel 9 est utilisé aussi bien pour permettre le verrouillage et le déverrouillage de l'appareil 1 dans sa position fermée que pour autoriser ou non son ouverture à plat. La position de blocage est située entre la position de verrouillage et la position de déblocage. Dans les présents modes de réalisation, le bouton de commande manuel 9 porte un crochet 10 qui est adapté à venir s'ancrer à un ergot 11 qui est porté par le deuxième sous-ensemble de cuisson (ici, le sous-ensemble inférieur de cuisson 2). Ainsi, quand le bouton de commande manuel 9 est dans sa position de verrouillage le crochet 10 emprisonne l'ergot 11 (cf. figure 2), et, quand le bouton 9 est dans sa position de blocage, le crochet 10 est dégagé de l'ergot 11 ce qui permet la libre rotation du sous-ensemble supérieur 3 dans sa position intermédiaire d'ouverture (cf. figure 3). Ici, le crochet 10 et l'ergot 11 sont disposés à l'intérieur de la coque du sous-ensemble inférieur 2 et ils ne sont pas visibles de l'extérieur.

Dans les présents modes de réalisation, le bouton de commande manuel 9 et le bras 20 sur lequel il est monté coulissant sont agencés de sorte que les positions de verrouillage et de blocage du bouton de commande manuel 9 sont indexées, en l'occurrence par un dispositif de passage de point dur. Dans les présents modes de réalisation, le bras 20 porte une bille d'indexage 22 qui est montée coulissante perpendiculairement à la direction de translation du bouton de commande manuel, entre une position saillante dans laquelle elle est sollicitée par un élément élastique (un ressort), et une position rétractée. Parallèlement, la surface intérieure 23 du bouton de commande manuel 9 comporte une rainure longitudinale 24 pour la réception de la bille d'indexage 22, délimitant l'amplitude du mouvement de translation du bouton de commande manuel 9. Afin de réaliser l'indexation des deux positions de verrouillage et de blocage, la rainure longitudinale 24 comporte deux cavités de réception 25, 26 correspondantes aux deux positions précitées dans lesquelles la bille d'indexage 22 est dans sa position saillante.

Le dispositif de sélection 8 comprend également un coulisseau 12 qui est monté en translation sur le premier sous-ensemble de cuisson (en l'occurrence, sur le sous-ensemble supérieur 3, et, plus précisément, sur la poignée 6 - ici, sur le bras 20 de la poignée 6 portant le bouton de commande manuel 9). La translation du coulisseau 12 (son seul degré de liberté) s'effectue selon la même direction que celle du bouton de commande manuel 9. Dans les présents modes de réalisation, le coulisseau 12 n'est pas accessible de l'intérieur, il s'étend le long de la poignée, à l'intérieur de celle-ci, et est entouré par le bouton de commande manuel 9.

Le coulisseau 12 est mobile entre une position de blocage et une position de déblocage. Quand il est dans sa position de blocage, l'amplitude de rotation des sous-ensembles de cuisson 2, 3 est délimitée par leur position fermée et leur position d'ouverture intermédiaire, et, quand il est dans sa position de déblocage, les deux sous-ensembles 2, 3 peuvent atteindre leur position ouverture à plat. Ainsi, les deux positions de blocage et de déblocage du coulisseau 12 correspondent, respectivement, aux deux positions de blocage et de déblocage du bouton de commande manuel 9. De façon plus précise, le coulisseau 12 comprend, à son extrémité longitudinale proche de la charnière 4, un doigt 13 qui est conformé de façon à coopérer avec une butée 14 portée par le deuxième sous-ensemble de cuisson (ici, par le sous-ensemble inférieur de cuisson 2), et, de façon plus précise, portée par un charnon 50 de ce sous-ensemble de cuisson. Quand le sous-ensemble supérieur de cuisson 3 est dans sa position intermédiaire d'ouverture, le doigt 13 est en butée contre la butée 14 lorsque le coulisseau 12 est dans sa position de blocage (cf. figure 4), et est dégagé de cette butée 14 lorsque le coulisseau 12 est dans sa position de déblocage (cf. figure 5). Les conformations conjuguées du doigt 13 et de la butée 14 tendent à améliorer la stabilité du sous-ensemble supérieur de cuisson 3 en position intermédiaire d'ouverture du fait que le doigt 13 prend appui sur la butée 14.

Quand le bouton de commande manuel 9 passe de sa position de verrouillage à sa position de blocage, le coulisseau 12 reste dans sa position de blocage (il n'y a pas d'interaction entre le coulisseau 12 et le bouton de commande manuel 9 entre ces deux positions). Quand le bouton de commande manuel 9 est dans sa position de blocage, il vient en contact avec le coulisseau 12 qui est lui-même dans sa position de blocage, et quand il passe de sa position de blocage à sa position de déblocage, il entraîne le coulisseau 12 de sa position de blocage à sa position de déblocage. A cette fin, dans les présents modes de réalisation, le bouton de commande manuel 9 porte une patte 27 qui, d'une part, est adaptée à venir en butée contre une surface de réception 28 portée par le coulisseau 12 quand le bouton de commande manuel 9 est dans sa position de blocage et, d'autre part, entraîne le déplacement de coulisseau 12 quand le bouton de commande manuel 9 est déplacé de sa position de blocage à sa position de déblocage, cette patte 27 étant sans contact avec la surface de réception 28 quand le bouton de commande manuel 9 est entre sa position de verrouillage et sa position de blocage.

Ainsi, le découplage du coulisseau 12 et du bouton de commande manuel 9 permet au dispositif de sélection 8 d'agir à la fois comme dispositif de sélection proprement dit (c'est-à-dire permettant ou non le franchissement de la position intermédiaire d'ouverture) et comme dispositif de verrouillage (c'est-à-dire permettant de verrouiller l'appareil en position fermée) et ceci de façon particulièrement simple (seul le bouton de commande manuel 9 est à manipuler), sans requérir une construction complexe et avec un nombre de pièces limitées (un bouton de commande manuel 9 et un coulisseau 12).

En outre, dans les présents modes de réalisation, le dispositif de sélection 8 comprend un ressort 17 qui prend appui contre le premier sous-ensemble de cuisson 3 (ici, le sous-ensemble supérieur de cuisson 3) et le coulisseau 12 et qui sollicite ce dernier dans sa position de blocage.

Enfin, dans les présents exemples, du fait de la structure particulière du sous-ensemble supérieur de cuisson 3 (un corps supérieur de cuisson 5 monté librement pivotant par rapport à la poignée 6), le dispositif de sélection 8 est conformé de façon à pouvoir empêcher la rotation indésirable de ce corps de cuisson 5 quand le sous-ensemble supérieur de cuisson 3 est entre sa position intermédiaire d'ouverture et sa position d'ouverture à plat.

A cet effet, dans le premier mode de réalisation, le bouton de commande manuel 9 possède une position d'immobilisation dans laquelle le corps supérieur de cuisson 5 est immobilisé par rapport à la poignée 6. En parallèle, le coulisseau 12 possède une position d'immobilisation correspondante.

Dans le premier mode de réalisation la position d'immobilisation et de déblocage sont les mêmes de sorte que le corps de cuisson 5 est immobilisé dès que le sous-ensemble supérieur de cuisson 3 dépasse sa position intermédiaire d'ouverture. A cet effet, une lame ressort 16 est portée sur le charnon 50 du sous-ensemble inférieur de cuisson 2, et s'étend sur la plage angulaire à laquelle le doigt 13 fait face quand le sous-ensemble supérieur de cuisson 3 est entre sa position intermédiaire d'ouverture et sa position d'ouverture à plat. Cette lame ressort 16 sollicite ainsi le coulisseau 12 vers sa position d'immobilisation (cette lame 16 est plus puissante que le ressort 17).

Afin de réaliser l'immobilisation du corps de cuisson 5, le coulisseau 12 qui est disposé entre la charnière 4 et la charnière annexe 7, comprend, à son extrémité longitudinale proche de la charnière annexe 7, un doigt annexe 18 qui est conformé de façon à coopérer avec un charnon 19 porté par le corps supérieur de cuisson 5. Quand le coulisseau 12 est dans sa position d'immobilisation (qui est la position de déblocage), le doigt annexe 18 immobilise le charnon 19 (cf. figure 5), ce qui empêche la rotation du corps supérieur de cuisson 5, et quand le coulisseau 12 est dans sa position de blocage, le doigt annexe 18 est sans contact avec le charnon 19 (cf. figure 4).

De plus, le doigt annexe 18 et le charnon 19 sont conformés de sorte que le doigt annexe 18 agit comme une came quand il entre en contact avec le charnon 19 de sorte que, quand le coulisseau 12 passe de sa position de premier contact avec le charnon 19 à sa position d'immobilisation, le corps supérieur de cuisson 5 subit une rotation l'entraînant jusque dans sa position angulaire immobilisée. En l'occurrence, le doigt annexe 18 a la forme d'un triangle isocèle dont le commet commun aux deux côtés identiques constitue l'extrémité libre du coulisseau 12, le charnon 19 comportant une ouverture présentant la forme conjuguée de ce sommet.

Dans le second mode de réalisation, afin d'empêcher la rotation indésirable du corps de cuisson 5, notamment quand le sous-ensemble supérieur de cuisson 3 est dans sa position intermédiaire d'ouverture, le sous-ensemble supérieur de cuisson 3 comprend, au niveau de la charnière annexe 7, un ressort de rappel 30 qui sollicite le corps supérieur de cuisson 5 dans une position dans laquelle son extrémité inférieure 31 soit au droit du sous-ensemble inférieur de cuisson 2, quand les deux sous-ensembles sont dans leur position intermédiaire d'ouverture.

De façon plus précise, le ressort de rappel 30 prend appui, d'une part, sur un ergot 32 porté par un bras 20 de la poignée 6 (ici, le bras opposé à celui portant le bouton de commande manuel 9), et, d'autre part, sur une excroissance 33 de l'arbre de rotation 34 qui définit l'axe de la charnière annexe 7 et qui est solidaire du corps supérieur de cuisson 5 (cf. figure 9).

Ainsi, comme illustré à la figure 8, la plaque inférieure de cuisson 35 qui est portée par le sous-ensemble inférieur de cuisson comprend, à son extrémité arrière (extrémité adjacente à la charnière 4), une fente 36 d'évacuation des graisses qui débouche dans un tiroir de récupération 37 monté coulissant sous la plaque. En position d'ouverture intermédiaire, le corps supérieur de cuisson 5 est orienté de sorte que l'extrémité inférieure 31 de la plaque 38 qu'il porte soit plus en avant que l'extrémité arrière 39 de la plaque inférieure de cuisson 35. Ainsi, l'ensemble des graisses de cuisson, qu'elles proviennent de l'une ou l'autre des plaques est récupérée dans le tiroir de récupération 37.

En outre, dans le second mode de réalisation, afin d'empêcher la rotation indésirable du corps de cuisson 5, quand le sous-ensemble supérieur de cuisson 3 est dans sa position ouverte à plat, l'appareil de cuisson 1 comprend un dispositif de stabilisation qui permet d'assurer une stabilité suffisante du corps supérieur de cuisson 5 pour que celui-ci puisse recevoir des aliments à cuire.

En l'occurrence, le dispositif de stabilisation est formé par des organes de stabilisation 40, 41 qui sont portés par le sous-ensemble inférieur de cuisson 2 et qui coopèrent avec des organes complémentaires de stabilisation 31 qui sont portés par le corps supérieur de cuisson 5 de sorte que, lorsque le sous-ensemble supérieur de cuisson 3 arrive dans sa position ouverte à plat, le dispositif de stabilisation impose au corps supérieur de cuisson 5 une position prédéfinie. De plus la position imposée du corps supérieur de cuisson 5 lui confère une légère inclinaison de sorte que les graisses de cuisson issues de la nourriture disposée sur la plaque supérieure de cuisson 38 sont amenées à la plaque inférieure de cuisson 35.

De façon plus précise, les organes de stabilisation complémentaires 31 sont formés par l'extrémité inférieure de la plaque supérieure de cuisson 38, les organes de stabilisation 40, 41 étant formés par des doigts 40, 41 portés par le sous-ensemble inférieur de cuisson 2. Ici, le sous-ensemble inférieur de cuisson 2 porte (directement) un doigt inférieur 40 et (indirectement, via chaque charnon 50) au moins un doigt supérieur 41, agencés de sorte que, quand le sous-ensemble supérieur de cuisson 3 est en position ouverte à plat, l'extrémité inférieure 31 de la plaque supérieure de cuisson 38 est disposée verticalement entre le doigt inférieur 40 (une bordure formant la limite arrière du sous-ensemble inférieur 2) et les deux doigts supérieurs 41. Ainsi, le déplacement du corps supérieur de cuisson 5 est limitée (voire nulle) dans un sens de pivotement autour de la charnière annexe 7 comme dans l'autre.

En utilisation, un utilisateur, dans un premier temps déverrouille l'appareil 1 en configuration fermée en faisant passer le bouton de commande manuel 9 de sa position de verrouillage (position indexée) à sa position de blocage (position indexée).

Ensuite, pour une opération de cuisson du type gaufrier, il lui suffit d'ouvrir le sous-ensemble supérieur de cuisson 3 jusque dans sa position intermédiaire d'ouverture dans laquelle il est en butée, de disposer l'aliment et de refermer le sous-ensemble de cuisson 3.

Pour une opération de cuisson du type barbecue, il lui suffit d'ouvrir le sous-ensemble supérieur de cuisson 3 jusqu'à ce qu'il vienne en butée dans sa position intermédiaire d'ouverture, d'entraîner le bouton de commande manuel 9 de sa position de blocage à sa position de déblocage/immobilisation, et de continuer le mouvement d'ouverture du sous-ensemble supérieur de cuisson 3 jusqu'à la position d'ouverture à plat dans laquelle la poignée 6 repose sur le plan de travail (et dans laquelle, dans le second mode de réalisation, l'extrémité inférieure 31 de la plaque supérieure de cuisson 38 est calée par les organes de stabilisation 40, 41). Lors de la fermeture du sous-ensemble supérieur de cuisson 3, dans le premier mode de réalisation, une fois la position d'ouverture intermédiaire franchie, la lame ressort 16 ne fait plus effet, et le coulisseau 12, sollicité par le ressort 17, passe dans sa position de blocage.

Quel que soit le type de mode de cuisson employé, une fois l'appareil fermée, il suffit d'entraîner le bouton de commande manuelle 9 dans sa position de verrouillage pour sécuriser la fermeture.

La présente invention, définie par les revendications, n'est pas limitée au présent mode de réalisation.

Il serait ainsi possible que le dispositif de sélection ne présente pas toutes les caractéristiques décrites. Il serait aussi possible que le sous-ensemble supérieur de cuisson soit monobloc, comme l'est le sous-ensemble inférieur de cuisson (sans poignée auquel s'articule le corps de cuisson).

Il serait également possible que la position d'immobilisation soit distincte de la position de déblocage, l'entraînement du coulisseau se faisant toujours par le bouton de commande manuel.

Il serait également possible que les organes de stabilisation ne comprennent, soit que des doigts inférieurs ou organes similaires empêchant un pivotement vers le bas (au niveau de la charnière) du corps supérieur de cuisson, soit que des doigts supérieurs ou organes similaires empêchant un pivotement vers le haut (au niveau de la charnière) du même corps. Le sous-ensemble supérieur de cuisson pouvant comprendre (par exemple au niveau de la liaison du corps supérieur avec la poignée) alors un dispositif empêchant le pivotement du corps dans le sens contraire de celui empêché par les doigts supérieurs ou inférieurs.

En outre indépendamment de toute autre caractéristiques, la présente invention concerne également deux autre objets, ne faisant pas partie de l'invention telle que revendiquée :
D'une part, un appareil de cuisson 1 comportant deux sous-ensembles de cuisson 2, 3 articulés entre eux par une charnière 4, et mobiles entre une position fermée et une position ouverte à plat à 180°, en passant par une position d'ouverture intermédiaire d'environ 90°, le sous-ensemble supérieur de cuisson 3 comprenant, d'une part, une poignée 6 qui est montée pivotante par rapport au sous-ensemble inférieur 2 par l'intermédiaire de la charnière 4, et, d'autre part, un corps supérieur de cuisson 5 qui est monté pivotant par rapport à la poignée 6 par l'intermédiaire d'une charnière annexe 7 dont l'axe est parallèle à celui de la charnière 4, le sous-ensemble inférieur de cuisson 2 comportant des organes de stabilisation 40, 41 adaptés à coopérer avec des organes complémentaires de stabilisation 31 portés par le corps supérieur de cuisson 5 de sorte que, lorsque le sous-ensemble supérieur de cuisson 3 est dans sa position ouverte à plat, la position du corps supérieur de cuisson 5 est stable.

Et d'autre part, un appareil de cuisson 1 comportant deux sous-ensembles de cuisson 2, 3 articulés entre eux par une charnière 4, et mobiles entre une position fermée et une position ouverte à plat à 180°, en passant par une position d'ouverture intermédiaire d'environ 90°, le sous-ensemble supérieur de cuisson 3 comprenant, une poignée 6 qui est montée pivotante par rapport au sous-ensemble inférieur 2 par l'intermédiaire de la charnière 4, un corps supérieur de cuisson 5 qui est monté pivotant par rapport à la poignée 6 par l'intermédiaire d'une charnière annexe 7 dont l'axe est parallèle à celui de la charnière 4, et un ressort de rappel 30 qui sollicite le corps supérieur de cuisson 5 par rapport à la poignée 6 dans une position prédéfinie quand les deux sous-ensembles de cuisson 2, 3 sont dans leur position intermédiaire d'ouverture.

Toute caractéristique décrite en relation avec les deux modes de réalisation, prise isolément ou en combinaison, peut être appliquée à ces deux objets.

## Revendications

1. Appareil de cuisson (1) comportant deux sous-ensembles de cuisson (2, 3) articulés entre eux par une charnière (4), et mobiles entre une position fermée et une position ouverte à plat à 180°, en passant par une position d'ouverture intermédiaire d'environ 90°, l'appareil (1) comportant un dispositif de sélection (8) pouvant passer d'un état à l'autre entre un état de blocage dans lequel l'amplitude de rotation des sous-ensembles (2, 3) est délimitée par leur position fermée et leur position d'ouverture intermédiaire, et un état de déblocage dans lequel les deux sous-ensembles (2, 3) peuvent atteindre leur position ouverture à plat, **caractérisé en ce que** le dispositif de sélection (8) comprend un bouton de commande manuel (9) monté en translation sur un premier sous-ensemble de cuisson (3), selon une direction radiale par rapport à l'axe de la charnière (4), entre une position de blocage et une position de déblocage qui correspondent aux deux état de blocage et de déblocage du dispositif de sélection (8).

2. Appareil de cuisson (1) selon la revendication 1, **caractérisé en ce que** le bouton de commande manuel (9) possède une position de verrouillage dans laquelle les deux sous-ensembles de cuisson (2, 3) sont verrouillés dans leur position fermée, la position de blocage étant entre la position de verrouillage et la position de déblocage.

3. Appareil de cuisson (1) selon l'une des revendications 1 ou 2, **caractérisé en ce que** le bouton de commande manuel (9) est monté coulissant sur le sous-ensemble supérieur de cuisson (3).

4. Appareil de cuisson (1) selon la revendication 3, **caractérisé en ce que** le sous-ensemble supérieur de cuisson (3) comprend un corps supérieur de cuisson (5) adapté à cuire un aliment en coopération avec le sous-ensemble inférieur de cuisson (2), et une poignée (6) qui est montée pivotante par rapport au sous-ensemble inférieur (2) par l'intermédiaire de la charnière (4) et par rapport au corps supérieur de cuisson (5) par l'intermédiaire d'une charnière annexe (7) dont l'axe est parallèle à celui de la charnière (4), le bouton de commande manuel (9) étant monté coulissant sur la poignée (6).

5. Appareil de cuisson (1) selon la revendication 4, **caractérisé en ce que** le sous-ensemble inférieur de cuisson (2) comporte des organes de stabilisation (40, 41) adaptés à coopérer avec des organes complémentaires de stabilisation (31) portés par le corps supérieur de cuisson (5) de sorte que, lorsque le sous-ensemble supérieur de cuisson (3) est dans sa position ouverte à plat, la position du corps supérieur de cuisson (5) est stable.

6. Appareil de cuisson (1) selon la revendication 5, **caractérisé en ce que** les organes de stabilisation complémentaires (31) sont formés par l'extrémité inférieure de la plaque supérieure de cuisson (38), les organes de stabilisation (40, 41) étant formés par au moins un doigt inférieur (40) et au moins un doigt supérieur (41) agencés de façon à recevoir entre eux l'extrémité inférieure (31) de la plaque supérieure de cuisson (38) quand le sous-ensemble supérieur de cuisson (3) est en position ouverte à plat.

7. Appareil de cuisson (1) selon l'une des revendications 4 à 6, **caractérisé en ce que** le sous-ensemble supérieur de cuisson (3) comprend un ressort de rappel (30) qui sollicite le corps supérieur de cuisson (5) par rapport à la poignée (6) dans une position prédéfinie quand les deux sous-ensembles de cuisson (2, 3) sont dans leur position intermédiaire d'ouverture.

8. Appareil de cuisson (1) selon la revendication 7, **caractérisé en ce que** le corps supérieur de cuisson (5) en position prédéfinie quand les deux sous-ensembles de cuisson (2, 3) sont dans leur position intermédiaire d'ouverture, est au droit du sous-ensemble inférieur de cuisson (2).

9. Appareil de cuisson (1) selon l'une des revendications 4 à 8, **caractérisé en ce que** le bouton de commande manuel (9) possède une position d'immobilisation dans laquelle le corps supérieur de cuisson (5) est immobilisé par rapport à la poignée (6), la position de blocage étant entre la position de verrouillage et la position d'immobilisation.

10. Appareil de cuisson (1) selon l'une des revendications 1 à 9, **caractérisé en ce que** le dispositif de sélection (8) comprend un coulisseau (12) monté en translation sur le premier sous-ensemble de cuisson (3), selon la direction de translation du bouton de commande manuel (9), entre une position de blocage dans laquelle l'amplitude de rotation des sous-ensembles de cuisson (2, 3) est délimitée par leur position fermée et leur position d'ouverture intermédiaire, et une position de déblocage dans laquelle les deux sous-ensembles (2, 3) peuvent atteindre leur position ouverture à plat, le coulisseau (12) étant entraîné de sa position de blocage à sa position de déblocage par le coulissement du bouton de commande manuel (9) de l'une à l'autre de ses deux positions correspondantes.

11. Appareil de cuisson (1) selon la revendication 10 dépendant de la revendication 2, **caractérisé en ce que** le coulisseau (12) reste dans sa position de blocage quand le bouton de commande manuel (9) passe de sa position de verrouillage à sa position de blocage.

12. Appareil de cuisson (1) selon l'une des revendications 10 ou 11 dépendantes de la revendication 9, **caractérisé en ce que** le coulisseau (12) possède une position d'immobilisation dans laquelle le corps supérieur de cuisson (5) est immobilisé par rapport à la poignée (6).

13. Appareil de cuisson (1) selon la revendication 12, **caractérisé en ce que** la position d'immobilisation du coulisseau (12) est sa position de déblocage, une lame-ressort (16) sollicitant ce dernier dans cette position quand le sous-ensemble supérieur de cuisson (3) est entre sa position intermédiaire d'ouverture et sa position ouverte à plat.

14. Appareil de cuisson (1) selon l'une des revendications 12 ou 13, **caractérisé en ce que** le coulisseau (12) est disposé entre la charnière (4) et la charnière annexe (7) et comprend, à son extrémité longitudinale proche de la charnière annexe (7), un doigt annexe (18) conformé de façon à immobiliser un charnon (19) porté par le corps supérieur de cuisson (5) quand le coulisseau (12) est dans sa position d'immobilisation.

15. Appareil de cuisson (1) selon la revendication 14, **caractérisé en ce que** le doigt annexe (18) et le charnon (19) sont conformés de sorte que le doigt annexe (18) agit comme une came avec le charnon (19) de sorte que, quand le coulisseau (12) passe de sa position de premier contact avec le charnon (19) à sa position d'immobilisation, le corps supérieur de cuisson (5) subit une rotation l'entraînant jusque dans sa position angulaire immobilisée.

## Claims

1. A cooking apparatus (1) including two cooking subsets (2, 3) hinged to each other through a hinge (4), and movable between a closed position and a flat open position at 180°, passing through an intermediate opening position at about 90°, the apparatus (1) including a selection device (8) movable between one state to the other among a blocking state in which the rotation magnitude of subsets (2, 3) is delimited by their closed position and their intermediate opening position, and an unblocking state in which both subsets (2, 3) may reach their flat open position, **characterized in that** the selection device (8) comprises a hand-operated control knob (9) translationaly mounted on a first cooking subset (3), along a radial direction with respect to the axis of hinge (4), between a blocking position and an unblocking position corresponding to both blocking and unblocking states of selection device (8).

2. The cooking apparatus (1) according to claim 1, **characterized in that** the hand-operated control knob (9) has a locking position in which both cooking subsets (2, 3) are locked in their closed position, the blocking position being located between the locking and unblocking positions.

3. The cooking apparatus (1) according to claim 1 or 2, **characterized in that** the hand-operated control knob (9) is slidingly mounted on the higher cooking subset (3).

4. The cooking apparatus (1) according to claim 4, **characterized in that** the higher cooking subset (3) comprises a higher cooking body (5) adapted for the cooking of food in cooperation with the lower cooking subset (2), and a handle (6) which is pivotally mounted with respect to the lower subset (2) by means of hinge (4) and with respect to the higher cooking body (5) by means of a secondary hinge (7) the axis of which is parallel to that of hinge (4), the hand-operated control knob (9) being slidingly mounted on handle (6).

5. The cooking apparatus (1) according to claim 4, **characterized in that** the lower cooking subset (2) comprises stabilizing members (40, 41) adapted to cooperate with complementary stabilizing members (31) borne by the higher cooking body (5) such that, when the higher cooking subset (3) is in its flat open position, the position of higher cooking body (5) is stable.

6. The cooking apparatus (1) according to claim 5, **characterized in that** the complementary stabilizing members (31) are formed by the lower end of the higher cooking plate (38), the stabilizing members (40, 41) being formed by at least a lower finger (40) and at least a higher finger (41) arranged so as to house the lower end (31) of higher cooking plate (38) therebetween when the higher cooking subset (3) is in its flat open position.

7. The cooking apparatus (1) according to one of claims 4 to 6, **characterized in that** the higher cooking subset (3) comprises a return spring (30) which biases the higher cooking body (5) with respect to handle (6) in a prescribed position when both cooking subsets (2, 3) are in their intermediate opening position.

8. The cooking apparatus (1) according to claim 7, **characterized in that** the higher cooking body (5) in the prescribed position when both cooking subsets (2, 3) are in their intermediate opening position, is above the lower cooking subset (2).

9. The cooking apparatus (1) according to one of claims 4 to 8, **characterized in that** the hand-operated control knob (9) has an immobilizing position in which the higher coking body (5) is immobilized with respect to handle (6), the blocking position being located between the locking and immobilizing positions.

10. The cooking apparatus (1) according to one of claims 1 to 9, **characterized in that** the selection device (8) comprises a slider (12) translationaly mounted on the first cooking subset (3), according to the translation direction of the hand-operated control knob (9), between a blocking position in which the rotation magnitude of the cooking subsets (2, 3) is delimited by their closed position and their intermediate opening position, and an unblocking position in which both subsets (2, 3) may reach their flat open position, slider (12) being moved from its blocking position towards its unblocking position by the sliding of the hand-operated control knob (9) from one to the other of its corresponding positions.

11. The cooking apparatus (1) according to claim 10 as depending on claim 2, **characterized in that** slider (12) remains in its blocking position when the hand-operated control knob (9) is moved from its locking position to its blocking position.

12. The cooking apparatus (1) according to one of claims 10 to 11 as depending on claim 9, **characterized in that** slider (12) has an immobilizing position in which the higher cooking body (5) is immobilized with respect to handle (6).

13. The cooking apparatus (1) according to claim 12, **characterized in that** the standstill position of slider (12) is the unblocking position thereof, a spring leaf (16) biasing it in this position when the higher cooking subset (3) is between its intermediate opening position and its flat open position.

14. The cooking apparatus (1) according to claim 12 or 13 as depending on claim 14, **characterized in that** slider (12) is disposed between hinge (4) and secondary hinge (7) and comprises, at its longitudinal end close to the secondary hinge (7), a secondary finger (18) sized so as to immobilize a knuckle (19) borne by the higher cooking body (5) when slider (12) is in its immobilizing position.

15. The cooking apparatus (1) according to claim 14, **characterized in that** the secondary finger (18) and knuckle (19) are sized such that the secondary finger (18) acts as a cam member with knuckle (19) such that, when slider (12) moves from its first contact position with knuckle (19) towards its standstill position, the higher cooking body (5) undergoes a rotation driving it to its immobilized angular position.

## Patentansprüche

1. Küchengerät (1) umfassend zwei Kochteileinheiten (2, 3), die aneinander durch ein Gelenk (4) angelenkt und zwischen einer geschlossenen und einer offenen, waagrechten Position um 180° bei Durchlauf einer Zwischenöffnungsposition bei ungefähr 90° beweglich sind, wobei das Gerät (1) eine Auswahlvorrichtung (8) umfasst, die von einem Zustand zum anderen zwischen einem Blockierzustand, in dem die Schwenkamplitude der Teileinheiten (2, 3) durch ihre geschlossene Position und Zwischenöffnungsposition begrenzt ist, und einem Freigabezustand übergehen kann, in dem die beiden Teileinheiten (2, 3) deren waagrechte Öffnungsposition erreichen können, **dadurch gekennzeichnet, dass** die Auswahlvorrichtung (8) einen manuellen Betätigungsknopf (9) umfasst, der an einer ersten Kochteileinheit (3) in Radialrichtung bezüglich der Achse des Gelenks (4) zwischen einer Blockierposition und einer Freigabeposition translatorisch montiert ist, die sowohl dem Blockier- als auch Freigabezustand der Auswahlvorrichtung (8) entsprechen.

2. Küchengerät (1) nach Anspruch 1, **dadurch gekennzeichnet, dass** der manuelle Betätigungsknopf (9) eine Verriegelungsposition besitzt, in der die beiden Kochteileinheiten (2, 3) in ihrer geschlossenen Position verriegelt sind, wobei die Blockierposition zwischen der Verriegelungsposition und der Freigabeposition ist.

3. Küchengerät (1) nach einem der Ansprüche 1 oder 2, **dadurch gekennzeichnet, dass** der manuelle Betätigungsknopf (9) auf der oberen Kochteileinheit (3) gleitend montiert ist.

4. Küchengerät (1) nach Anspruch 3, **dadurch gekennzeichnet, dass** die obere Kochteileinheit (3) einen oberen Kochkörper (5), der geeignet ist, ein Nahrungsmittel durch Zusammenwirken mit der unteren Kochteileinheit (2) zu garen, und einen Griff (6) umfasst, der schwenkbar in Bezug zur unteren Teileinheit (2) mit Hilfe des Gelenks (4) und in Bezug zum oberen Kochkörper (5) mit Hilfe eines zusätzlichen Gelenks (7), dessen Achse parallel zu jener des Gelenks (4) ist, montiert ist, wobei der manuelle Betätigungsknopf (9) auf dem Griff (6) gleitend montiert ist.

5. Küchengerät (1) nach Anspruch 4, **dadurch gekennzeichnet, dass** die untere Kochteileinheit (2) Stabilisierungselemente (40, 41) umfasst, die geeignet sind, mit komplementären Stabilisierungselementen (31) zusammenzuwirken, die vom oberen Kochkörper (5) getragen werden, so dass, wenn sich die obere Kochteileinheit (3) in ihrer flachen offenen Position befindet, die Position des oberen Kochkörpers (5) stabil ist.

6. Küchengerät (1) nach Anspruch 5, **dadurch gekennzeichnet, dass** die komplementäre Stabilisierungselemente (31) vom unteren Ende der oberen Kochplatte (38) gebildet sind, wobei die Stabilisierungselemente (40, 41) von mindestens einem unteren Finger (40) und mindestens einem oberen Finger (41) gebildet sind, die derart angeordnet sind, dass sie zwischen sich das untere Ende (31) der oberen Kochplatte (38) auf nehmen, wenn sich die obere Kochteileinheit (3) in der flachen offenen Position befindet.

7. Küchengerät (1) nach einem der Ansprüche 4 bis 6, **dadurch gekennzeichnet, dass** die obere Kochteileinheit (3) eine Rückstellfeder (30) umfasst, die den oberen Kochkörper (5) in Bezug zum Griff (6) in eine vordefinierte Position drückt, wenn sich die beiden Kochteileinheiten (2, 3) in ihrer Zwischenöffnungsposition befinden.

8. Küchengerät (1) nach Anspruch 7, **dadurch gekennzeichnet, dass** der obere Kochkörper (5) in einer vordefinierten Position, wenn sich die beiden Kochteileinheiten (2, 3) in ihrer Zwischenöffnungsposition befinden, zur unteren Kochteileinheit (2) im rechten Winkel steht.

9. Küchengerät (1) nach einem der Ansprüche 4 bis 8, **dadurch gekennzeichnet, dass** der manuelle Betätigungsknopf (9) eine Feststellposition besitzt, in der der obere Kochkörper (5) in Bezug zum Griff (6) festgestellt ist, wobei die Blockierposition zwischen der Verriegelungsposition und der Feststellposition ist.

10. Küchengerät (1) nach einem der Ansprüche 1 bis 9, **dadurch gekennzeichnet, dass** die Auswahlvorrichtung (8) eine Gleitführung (12) umfasst, die in Translation auf der ersten Kochteileinheit (3) in Translationsrichtung des manuellen Betätigungsknopfes (9) zwischen einer Blockierposition, in der die Drehamplitude der Kochteileinheiten (2, 3) durch ihre geschlossene Position und ihre Zwischenöffnungsposition begrenzt ist, und einer Freigabeposition, in der die beiden Teileinheiten (2, 3) ihre flache Öffnungsposition erreichen können, montiert ist, wobei die Gleitführung (12) von ihrer Blockierzur Freigabeposition durch das Gleiten des manuellen Betätigungsknopfes (9) von der einen in die andere seiner beiden entsprechenden Positionen angetrieben wird.

11. Küchengerät (1) nach Anspruch 10 in Abhängigkeit von Anspruch 2, **dadurch gekennzeichnet, dass** die Gleitführung (12) in ihrer Blockierposition bleibt, wenn der manuelle Betätigungsknopf (9) von seiner Verriegelungsposition in seine Blockierposition übergeht.

12. Küchengerät (1) nach einem der Ansprüche 10 oder 11 in Abhängigkeit von Anspruch 9, **dadurch gekennzeichnet, dass** die Gleitführung (12) eine Feststellposition besitzt, in der der obere Kochkörper (5) in Bezug zum Griff (6) festgestellt ist.

13. Küchengerät (1) nach Anspruch 12, **dadurch gekennzeichnet, dass** die Feststellposition der Gleitführung (12) ihre Freigabeposition ist, wobei ein Federblatt (16) diese letztgenannte in diese Position drückt, wenn die obere Kochteileinheit (3) zwischen ihrer Zwischenöffnungsposition und ihrer flachen Öffnungsposition ist.

14. Küchengerät (1) nach einem der Ansprüche 12 oder 13, **dadurch gekennzeichnet, dass** die Gleitführung (12) zwischen dem Gelenk (4) und dem zusätzlichen Gelenk (7) angeordnet ist und an ihrem Längsende nahe dem zusätzlichen Gelenk (7) einen zusätzlichen Finger (18) umfasst, der derart ausgeführt ist, dass er ein Gelenk- oder Scharnierteil (19), der vom oberen Kochkörper (5) getragen wird, feststellt, wenn sich die Gleitführung (12) in ihrer Feststellposition befindet.

15. Küchengerät (1) nach Anspruch 14, **dadurch gekennzeichnet, dass** der zusätzliche Finger (18) und der Gelenk- oder Scharnierteil (19) derart ausgeführt sind, dass der zusätzliche Finger (18) wie eine Nocke mit dem Gelenk- oder Scharnierteil (19) wirkt, so dass, wenn die Gleitführung (12) von ihrer ersten Kontaktposition mit dem Gelenk- oder Scharnierteil (19) in ihre Feststellposition übergeht, der obere Kochkörper (5) eine Drehung ausführt, die ihn in seine festgestellte Winkelposition mitnimmt.
